(19) **Europäisches Patentamt**

**European Patent Office**

**Office européen des brevets**

(11) **EP 0 964 974 B1**

(12) **EUROPEAN PATENT SPECIFICATION**

(45) Date of publication and mention
of the grant of the patent:
**06.11.2002 Bulletin 2002/45**

(51) Int Cl.⁷: **E05F 15/10**, H02P 7/68,
H02P 5/50

(21) Application number: **98902965.7**

(22) Date of filing: **18.02.1998**

(86) International application number:
**PCT/DK98/00063**

(87) International publication number:
**WO 98/037297 (27.08.1998 Gazette 1998/34)**

(54) **AN OPERATING SYSTEM FOR ELECTRICALLY OPERATED DEVICES SUCH AS DOORS, WINDOWS AND THE LIKE, AND DRIVE UNIT FOR THE USE IN SUCH A SYSTEM**

EIN ANTRIEBSSYSTEM FÜR ELEKTRISCH BETÄTIGTE VORRICHTUNGEN, WIE TÜREN, FENSTER UND DERGLEICHEN, SOWIE ANTRIEBSEINHEIT ZUR VERWENDUNG BEI EINEM DERARTIGEN SYSTEM

SYSTEME D'OPERATION DE DISPOSITIFS ACTIONNES ELECTRIQUEMENT, TELS QUE DES PORTES, DES FENETRES ET ANALOGUES, ET UNITE D'ENTRAINEMENT PREVUE POUR UN TEL SYSTEME

(84) Designated Contracting States:
**AT BE CH DE DK ES FI FR GB GR IE IT LI LU MC NL PT SE**
Designated Extension States:
**AL LT LV MK RO SI**

(30) Priority: **20.02.1997 DK 18097**

(43) Date of publication of application:
**22.12.1999 Bulletin 1999/51**

(73) Proprietor: **VKR Holding A/S**
**2860 Soeborg (DK)**

(72) Inventor: **BINDER, Erik, Ambrosius**
**DK-2950 Vedbaek (DK)**

(74) Representative: **Carlsson, Eva et al**
**Internationalt Patent-Bureau,**
**23 Hoje Taastrup Boulevard**
**2630 Taastrup (DK)**

(56) References cited:
**EP-A- 0 735 665**          **DE-A- 4 041 087**
**DE-A- 4 234 501**          **DE-U- 29 623 428**
**GB-A- 2 189 906**          **GB-A- 2 202 967**
**US-A- 5 659 301**

## Description

The present invention relates to an operating system for electrically operated devices such as doors, windows, screening devices and the like, comprising a plurality of program-controlled drive units each with a drive unit casing containing a motion transfer member for connection to an operated device and drivingly linked to a reversible drive motor having an associated motor control circuit, and means for synchronization of the drive units such that they can jointly operate the device.

In the electrical operation of openable windows with large and relatively heavy window sashes, it is known to use an operating arrangement with several parallel opening/closing drive units mounted on the same frame side of the window and provided with linkage mechanisms in the form of chains or the like, the movement of which is driven by the motors in the drive units and the ends of which are connected with fittings on the opposite sash side such that the drive units cooperate in controlling the opening and closing movement of the window sash.

In order to avoid harmful effects on the window sash and the risk of deformation of the sash, it is further known to synchronize the motor control in the drive units in such an arrangement so that the linkage mechanisms move together.

Electrical operating systems of the above stated type are thus known inter alia from the US patents nos 4,933,613 and 5,004,962, EP patent application no 0 618 338 and DE patent application no 40 41 087. These known systems have in common that a joint control circuit is used for the drive units which, according to the two US patents, are controlled according to a master-slave principle which, in case the drive units get out of stroke, as a rule brings the drive units running too fast to a standstill.

The said DE patent application discloses a control method arid a system with a separate joint control circuit whereby the drive units are synchronized to keep stroke by means of an actual speed adjustment where drive units running too fast are adapted to the one running most slowly at any time through reduction of the motor voltage.

On the basis of the prior art, where US patent no. 4,993,613 is considered the priort art most relevant to claim 1, the object of the invention is to provide an electrical window operating system of the kind stated where a synchronization of the drive units with an improved accuracy compared to the stated technology is obtained without using a joint control circuit, be it in the form of a master drive unit or a separate control circuit, and the wirings thus necessary between such a circuit and the individual drive units in the system.

For this purpose, the operating system according to the invention is characterized in that each drive unit is a self-contained, autonomous unit connected to a mutual communication line, that the motor control circuit in each drive unit comprises a microprocessor with an associated memory for storage of identification information, and that the microprocessor is programmed for transmission of said identification information to the mutual communication line together with synchronizing data representing the current position of the motion transfer member of the drive unit in question, and for receiving the synchronizing data and identification information about the other drive units from the mutual communication line, and furthermore is programmed to affect the drive motor of the drive unit in dependence of the transmitted and received synchronizing data and, subsequent to activation of the operating system, not to start the associated drive motor until it has both completed transmission of its own identification data to the mutual communication line and received therefrom identification data for the other units.

By the measures stated further in claims 2-8, synchronizing and communication protocols and priority specifications are provided for communication between the individual drive units in the system and entail a high degree of security in the operation of the communication.

For use in the operating system, the invention also provides a self-contained, autonomous drive unit, as disclosed by DE-A-40 41 087 according to the preamble of claim 9, comprising a drive unit casing designed for stationary mounting and comprising a motion transfer member designed for connection with the operated device and in engagement with a reversible drive motor with an associated motor control circuit, which drive unit is designed as a program-controlled unit, the motor control circuit comprising a microprocessor with an associated memory containing operation parameters for the drive motor of the unit.

In order to obtain a particularly flexible system where the individual drive units can easily be adapted to meet varying needs, e.g. as a consequence of tolerances, load variations, etc., such a drive unit according to the invention is characterized in that the memory is a reprogrammable memory which contains identification data and calibration constants for the unit and can be programmed and reprogrammed from the outside via the current supply conductors to the drive unit by means of an external programming device via an interface unit which when connected to the current supply conductors brings these into a programming condition deviating from a normal operating condition and in which data can be exchanged between the microprocessor and the external programming unit.

In an advantageous embodiment of such a drive unit, a limitation of the current consumption is ensured by the stored operation parameters comprising a predetermined maximum supply current for the drive motor, and the microprocessor having connected means for monitoring voltage and current for the motor and being programmed to calculate the current supply current on the basis of the measured motor current and to reduce the motor voltage and thus the speed when the supply current reaches the stored maximum value.

In the following, the invention will be explained in more detail with reference to the schematical drawing, where

Fig. 1 is a schematic diagram of a configuration example of an operating system according to the invention,

Fig. 2 is a block diagram showing the principal components of an embodiment of a window drive unit for the use in the operating system,

Fig. 3 shows the connection of the drive unit shown in fig. 2 to an external programming device,

Fig. 4 shows the design of a circuit in the drive unit for the use in the data exchange between the drive unit and the external programming device,

Fig. 5 shows the design of a circuit for limitation of the current consumption of the drive unit shown in Fig. 2, and

Fig. 6 shows a phasing diagram illustrating the communication specifications for data exchange between the drive units and the mutual communication line.

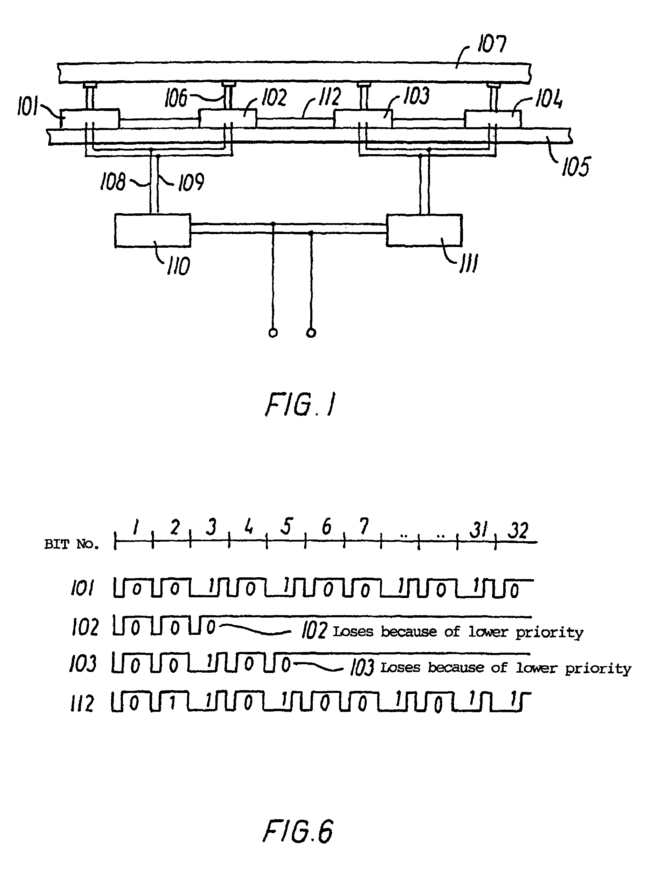

In the window operating system shown in Fig. 1, four drive units 101, 102, 103 and 104 are used for opening and closing a relatively heavy window sash 100 and said units are mounted parallel to their drive unit casings mounted on the same frame portion 105, e.g. the bottom horizontal frame portion, whereas the linkage mechanisms 106 of the drive units, which can be e. g. chain members of a design known per se for the use in window drive units, are connected to fittings mounted on the opposite sash portion 107. The connection of the linkage mechanisms to the sash fittings may in a manner known per se be releasable.

In the shown configuration example, the drive units 101-104 are arranged in two pairs 101, 102 and 103, 104, respectively, and the current supply conductors 108 and 109 are led to the two pairs of drive units via separated lock drive units 110 and 111 which serve for the activation and deactivation of lock members locking the sash 107 in relation to the frame 105 and can be arranged such that operation of the opening/closing drive units 101-104 is only possible when the sash 107 is released from locking in relation to the frame 105.

For synchronization of the opening and closing movements of the linkage mechanisms 106 in the four drive units 101-104, the operating system according to the invention is designed with a mutual communication line 112 by which the four drive units 101-104 exchange synchronization information as it is further explained in the following in order to ensure that the drive units and thus the linkage mechanisms run together.

In the following, the design features important for the preferred embodiment of the invention and for the function of the individual drive units are explained first.

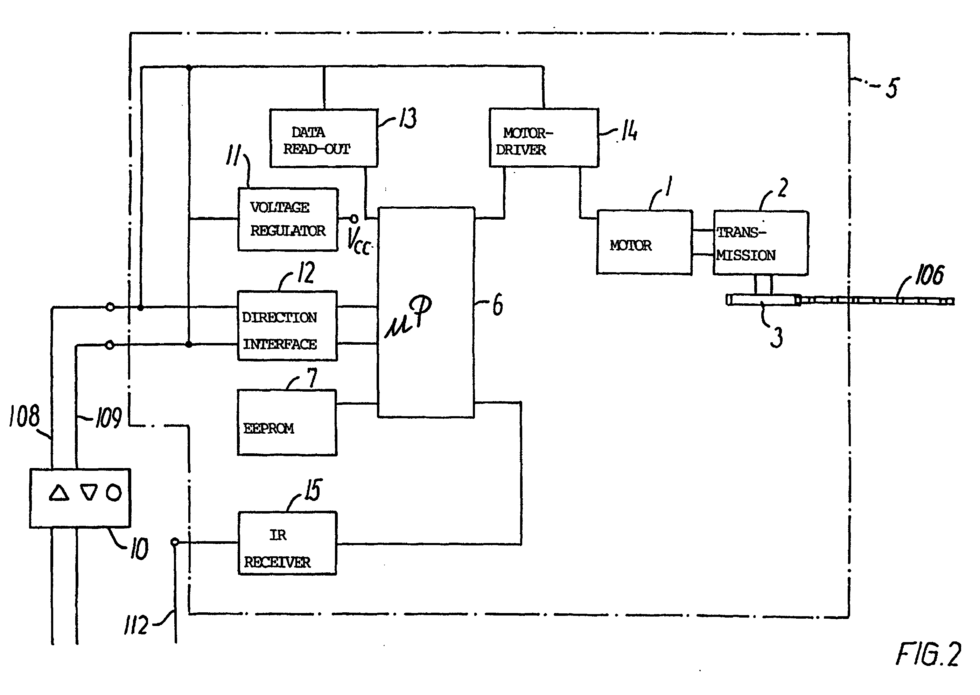

In the embodiment of a drive unit as shown in Fig. 2 for the use in the operating system according to the system, the unit is designed as a self-contained, autonomous unit to be used e.g. in connection with a chain drive unit of the type which is well-known for opening and closing of different window types, in particular roof windows.

The drive unit comprises as principal components a reversible electrical drive motor 1 which via a built-in transmission 2 is connected to a drive element for the linkage mechanism 106, e.g. a chain wheel 3. The motor 1, the transmission 2 and the chain wheel 3 are together with the engaging portion of the chain 106 and the electronic components in the drive unit built into the casing 5.

To control all operation functions, the drive unit contains a microprocessor 6 with control programs stored in an internal ROM. The microprocessor 6 is connected with a reprogrammable EEPROM 7 in which operation parameters for the function of the drive unit in the actual use are stored. The current supply to the drive unit is effected via current supply conductors 108 and 109 which in the drive unit are connected to a voltage regulator 11 which provides a supply voltage Vcc to the microprocessor 6 and other electronic components in the drive unit and is furthermore connected with the microprocessor via a direction interface circuit 12 and a data read-out circuit 13.

The current supply conductors 108 and 109 are in addition connected to a motor driver circuit 14 controlled by the microprocessor 6 and controlling the connection and disconnection together with the rotating direction for the motor 1.

Furthermore, a synchronization interface circuit 15 is connected to the microprocessor 6 via which circuit the drive unit is connected to the mutual communication line 112.

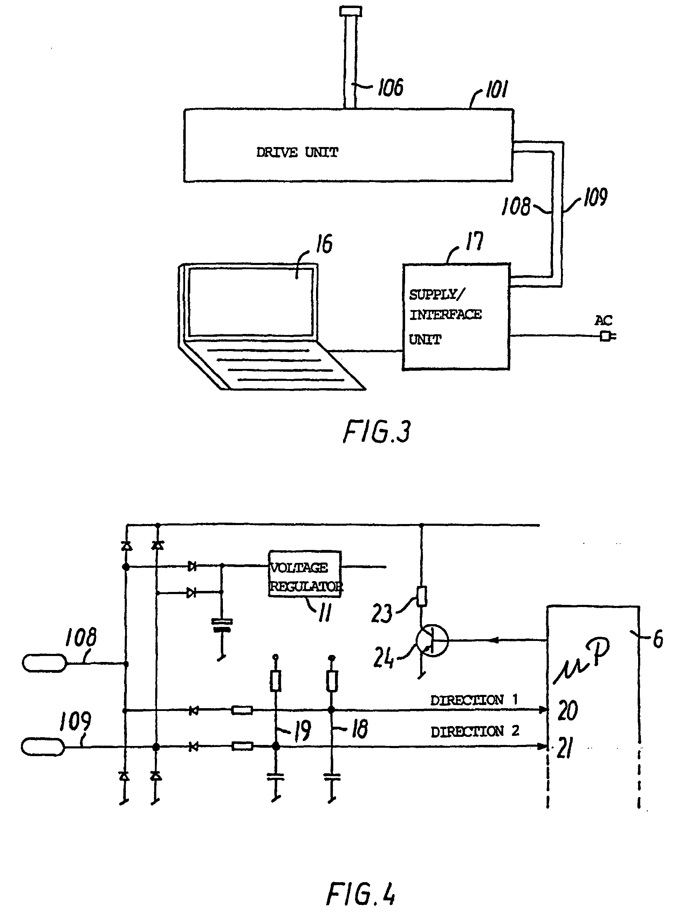

As shown in Fig. 3, the drive unit 101 is designed to exchange data with an external programming unit which can be a portable PC 16 which via an interface unit 17 is connected to the current supply conductors 108 and 109 of the drive unit which in the operating condition is supplied with a DC voltage, e.g. a full-wave rectified supply voltage, the polarity of which determines the rotating direction of the reversible motor 1.

In the programming arrangement shown in Fig. 3, the interface unit 17 is adapted to switch the polarity of the current supply conductors 108 and 109 at a frequency, which is considerably higher than the mains frequency, e.g. 10 kHz, whereby the drive unit as explained in the following is brought into a programming or data exchange condition deviating from a normal operation condition.

In the drive unit, the direction interface circuit 12 contains as shown in Fig. 4 two RC couplings 18 and 19 each in connection with one of the current supply conductors 108 and 109. From the direction interface circuit 12, two inputs 20 and 21 of the microprocessor receive direction control signals which in the normal operating conditions are unambiguously determined by the polarity of the current supply conductors 108 and 109 and determine the rotating direction of the motor 1.

If e.g. the current supply conductor 108 is positive compared to the current supply conductor 109, the capacitor in the RC coupling 18 is charged through the associated resistance, whereas the capacitor in the RC coupling 19 is discharged through the associated resistance whereby the input 20 receives a direction control signal with the logical value "1" whereas the input 21 receives a direction control signal with the logical value "0". If, conversely, the current supply conductor 109 is positive compared to the current supply conductor 108, the direction control signal to the inputs 20 and 21 assume the logical values "0" and "1", respectively.

By the switching of the current supply conductors 108 and 109 at a relatively high frequency effected in the programming or data exchange condition, the capacitors in both RC couplings 18 and 19 are discharged, such that the signals sent to the inputs 20 and 21 of the microprocessor both assume a low level corresponding to logical "0" whereby the microprocessor is brought into the programming or data exchange condition.

Having completed the programming or data exchange and the programming and interface units 16 and 17 being disconnected again, the microprocesor can only be brought back to normal operating condition by a separate reset operation, e.g. by giving an end command on the portable PC 16.

In the programming or data exchange condition, by giving suitable commands on the portable PC 16, either data representing predetermined parameter values can be transmitted from this to the microprocessor 6 and the EEPROM 7 connected thereto, or stored data in the EEPROM 7 or the microprocessor 6 can be read out to the portable PC 16.

The data transfer from the portable PC 16 to the microprocessor 6 can e.g. be effected by converting in the interface unit 17 the commandos entered into the portable PC 16 to bit combinations which are transmitted to the drive unit by switching the polarity on the current supply conductors 108 and 109 at a suitable low frequency corresponding to a bit rate suitable for reception and decoding of the information.

By way of example, the data transfer to the interface unit can be effected from the serial port on the portable PC 16 using standard NRZ coding. The bit rate will then be 300 baud corresponding to a maximum pulse rate on the current supply conductors 108 and 109 of .150 Hz. The transmitted bit patterns may consequently be decoded by the RC couplings 18 and 19 and from here delivered to the inputs 20 and 21 of the microprocessor 6 instead of the direction control signals supplied in the normal operating condition.

In the microprocessor 6, a terminal 22 is connected to the EEPROM 7.

The transmission protocol for transferring parameter information from the portable PC 16 to the microprocessor 6 can be organized in frames or pages of each 8 bytes consisting of a serially transmitted bit string of 8 bits. At the beginning of the transmission, a byte with an instruction or commando about started transmission is first transferred in the first frame and followed by a byte identifying the parameter which is subsequently read and serves for addressing when writing in the EEPROM 7, and one or more control bytes. After a pause corresponding to the remaining duration of the first frame or page, the actual parameter information is transferred in the 8 bytes in the subsequent frame whereupon in the following frame the control and frame conclusion information is transmitted. The transmitted parameter data are buffered in a RAM in the microprocessor before they are stored from there in the EEPROM 7 which e.g. can have a capacity of 16 frames or pages of 8 bytes or a total of 128 bytes.

In this way, both in connection with the production of the drive units according to the invention and at later time, e.g. in connection with final mounting, programming or reprogramming of relevant operating parameters can be effected. With a view to the use of the drive unit in an operating system according to the invention with more drive units, the programming in connection with the production will comprise a serial number for the drive unit and can further comprise calibration constants together with certain operating parameters, whereas in the final mounting, it will typically be programming of operating parameters which can vary in dependence of the window type for which the drive unit is be used and the working load to which the drive can be expected to be subjected and which can typically comprise maximum pull, speed or power or maximum opening degree for the window.

As stated in the above, in the programming or data exchange condition, data read-out can also be effected from the drive unit to the portable PC 16, e.g. in order to verify the programmed operating parameters or to read out data which during operation are logged in the drive unit.

Data read-out is effected from the microprocessor 6 by connecting and disconnecting the load resistance 23 shown in Fig. 4 by means of a transistor switch 24 in accordance with the bit pattern which is to be read out. The thus caused changes in the current which the drive unit draws from the current supply conductors 108 and 109 can in the interface unit 17 be registered and converted to a digital signal which can be read and decoded by the portable PC 16.

The data read-out is initiated by transfer of an instruction or a command from the portable PC.

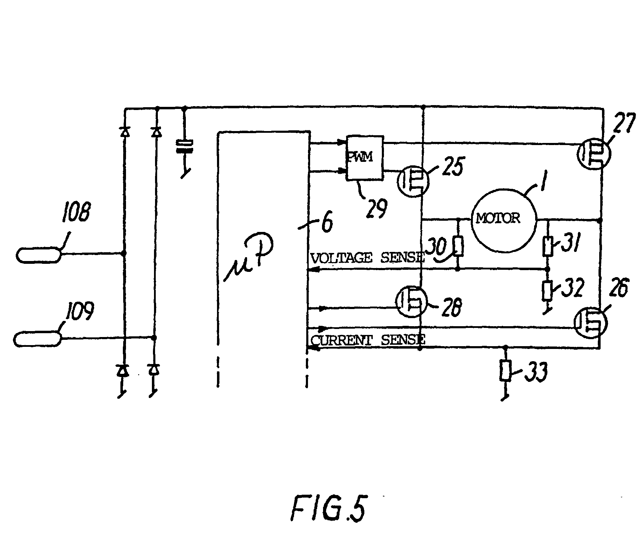

During normal operation, the microprocessor 6 controls the rotating direction for the motor 1 which is a DC motor, by activation of one of two pairs of field-effect transistors 25, 26 or 27, 28 in the driver circuit 14 shown in Fig. 5, whereas current and voltage to the motor are controlled by pulse width modulation in a PMW modulator 29 connected between the microprocessor 6 and the field-effect transistor pairs 26, 26 and 27, 28. The speed of the DC motor 1 determined by the motor voltage is monitored by the microprocessor by measurement of the motor voltage by means of a resistance network with resistances 30, 31 and 32 whereas the motor torque is monitored by voltage measurement via a current sensor resistance 33. In order to maintain a usually constant motor speed independently of the torque, the voltage measured by means of resistor network 30-32 is compensated for the voltage drop over the internal resistance of the motor calculated on the basis of the measured motor current. The current drawn from current supply conductors 108 and 109 can thus be calculated by muliplication of the measured motor current with the duty-cycle of the pulse width modulated signal.

In isolated usage of the shown drive unit, the program control in the microprocessor uses a control algorithm which primarily tries to maintain the motor speed constant even though the motor is subjected to varying loads but in such a way that the programmed maximum motor current and a programmed maximum current consumption are not exceeded.

As long as the motor current or the current consumption have not reached the programmed maximum values, the following applies for the voltage $V_m$ over the motor terminals

$$V_m = V_e + k * R_m * I_m,$$

where $V_e$ is the EMF of the motor, $I_m$ is the motor current, $R_m$ is the internal resistance and k a constant which for stability reasons is smaller than 1.

When the current consumption or motor current reach the programmed maximum, the motor voltage is reduced by control of the pulse width modulated signal, such that the current consumption decreases to the programmed maximum whereby the motor speed is reduced.

When the drive unit as shown in Fig. 1 is to function in a window operating system with the parallel connected drive units 101-104 connected to a mutual communication line 112, the EEPROM 7 in each drive unit contains besides its own serial number the number of other connected units as stored operating parameters and after start of the motor 1 in each drive unit, synchronization data are generated by this microprocessor 6 and represent the time-integrated value of the motor voltage $V_m$ since the motor start compensated for the voltage drop over the internal resistance of the motor, this value expressing the moving distance covered at any time by the motion transfer member or the chain 106.

If the motor voltage disappears, the current synchronization data are stored as information on the the current position of the motion transfer member or the chain 106. At the end of a closing movement of the window, the integration is reset.

These synchronization data are transmitted from the microprocessor 6 via the synchronization interface circuit 15 on the mutual communication line 112. In this transmission, the transmission of synchronization data will begin by transmission of the serial number of the unit as identification data for the transmitting drive unit.

In each of the drive units 101-104, the microprocessor 6 is further programmed to operate independently of the transmission of synchronization data from the unit itself in a receiving condition where it can receive synchronization data from the other drive units via the mutual communication line. Such received synchronization data are delivered to the microprocessor 6 via the synchronization interface circuit 15.

In order to ensure a correct operation of the exchange of the synchronization data on the mutual communication line 112, the microprocessors 6 in the drive units 101-104 are programmed to follow a number of communication specifications or protocols.

1. Thus, in the transmission and reception of identification and synchronization data to and from the mutual communication line 112, a bit coding is used where a segmented bit period, e.g. with four equally long bit segments, always starts with a transition from logical high to logical low representation and where the logical value 0 is represented by a first bit segment with logical low representation followed by three segments with logical high representation, whereas the logical value 1 is represented by three bit segments with logical low representation followed by a bit segment with logical high representation.

2. Whereas the receiving condition for a drive unit is activated at the beginning of each bit period by detection of the transition from logical high to logical low representation, the transmission condition of a drive unit is only activated if, during the fourth bit segment in a bit period, no transition from the logical high to logical low representation which would be a sign of data transmission from one or more of the other drive units is detected.

3. All data exchange between the drive units and the mutual communication line 112 is effected using a frame format where a frame consists of four bytes of which the first contains frame identification data, the two following identification data for the drive unit which has transmitted the frame in question and the last byte contains the actual synchronization data. Each byte contains eight bits and is followed by a frame pause with a duration of at least two bit periods.

4. To make an order of priority between several drive units, which at the same time start emission of information on the mutual communication line 112, the microprocessor 6 in each drive unit is programmed to register logical 1 as dominant bit at simultaneous presence of logical 0 on the mutual communication line. This specification entails that the drive unit which in such a situation transmits logical 1 takes precedence over the unit transmitting logical 0.

5. By simultaneous start of the transmission from two or more drive units, there is further effected a non-destructive arbitration by bits with priority to the drive unit which transmits the frame first to contain logical 1, i.e. has the highest numerical value, whereas the transmission is stopped for the other simultaneously transmitting units.

When a transmission is completed, the next transmission from the unit in question can only be initiated after a predetermined pause, e.g. 400 ms.

By the order of priority which follows of this specification, there will thus within the first byte of each frame, i.e. which contains serial number information, be effected a selection of the unit which must have access to the transmission to the mutual communication line 112. A drive unit which loses by this selection will try to transmit the same frame again after each following frame pause until a succesful transmission is accomplished, the programming, however, can comprise a maximum allowable number repetition stored as parameter in the EEPROM 7 in each drive unit.

The selection procedure which follows from the above communication specification is carried out by the drive units which are activated to the transmission condition by comparison of the bits transmitted by the unit itself with bits received from the communication line.

The phasing diagram in Fig. 6 shows an example of the selection of the transmitted drive units which follows from the said communication specifications.

The three drive units 101, 102 and 103 start transmission at the same time and all three transmit logic 0 in the two first bit periods 1 and 2. In bit period 3, the units 101 and 103 transmit logical 1, whereas the unit 102 still transmits logical 0. The microprocessor in the unit 102 will thus register discrepancy between the bit value transmitted by the unit itself and the bit value received from the mutual communication line with precedence to the latter and on this basis stop its own transmission for the remaining frame duration of 30 bit periods. After both units 101 and 103 in period 4 have transmitted logical 0, the unit 101 transmits in period 5 logical 1, whereas the unit 103 transmits logical 0 and is thus made to stop its own transmission such that in the remaining part of the frame period, only data from the unit 101 are transmitted to the mutual communication line 112.

In the activation of the operating system in Fig. 1 and before start of the motors in the connected drive units 101-104, an initialization procedure is carried out, during which the individual units after a delay time of e.

g. 100 msec in a period of e.g. 100 msec seek for a frame start on the communication line in the form of a transition from high to low representation. If such a frame start is not detected, the unit itself generates a frame start by transmitting a frame containing its serial number and synchronization data which at this time is initialized to zero.

As the serial numbers of the units are different, only one of the units will according to the above explained communication specifications succeed in completing the transmission which is registered in the microprocessor by resetting a transmission counting function. If the transmission is not completed as a consequence of the simultanous transmission from one or more of the other units, it is repeated at first given occassion.

Only after all units have completed transmission of their own serial number in this way and received, and by comparison of the stored serial numbers in the EEPROM 7, identified the serial numbers from all the other units, the motor is started in each unit and the actual movement synchronization begins.

When the motors in the drive units are started, a comparison is effected in each drive unit between the synchronization data transmitted and received by the unit. In case the drive units fall out of step, e.g. if one of them starts to run slower, an adjustment is initiated in the other drive units whereby the motor voltage and thus the speed are reduced or the motor is brought to a complete stop until it is again ascertained that the drive units are working synchronously. Such a situation can e.g. occur if one of the drive units has reached the programmed maximum motor current earlier than the others and as a consequence hereof has reduced its own motor voltage and thus the speed.

**Claims**

1. An operating system for electrically operated devices such as doors, windows, screening devices and the like, comprising a plurality of program-controlled drive units (101-104) each with a drive unit casing containing a motion transfer member (106) for connection to an operated device (105) and drivingly linked to a reversible drive motor (1) having an associated motor control circuit, and means for synchronization of the drive units such that they can jointly operate the device (105), **characterized in that** each drive unit (101-104) is a self-contained, autonomous unit connected to a mutual communication line (112), that the motor control circuit in each drive unit comprises a microprocessor (6) with an associated memory (7) for storage of identification information, and that the microprocessor (6) is programmed for transmission of said identification information to the mutual communication line (112) together with synchronizing data representing the current position of the motion transfer member (106) of the drive unit in question, and for receiving the synchronizing data and identification information about the other drive units from the mutual communication line (112), and furthermore is programmed to affect the drive motor (1) of the drive unit in dependence of the transmitted and received synchronizing data and subsequent to activation of the operating system first to start the associated drive motor (1) after it has both completed transmission of its own identification data to the mutual communication line (112) and received therefrom identification data from the other units.

2. An operating system according to claim 1, **characterized in that** the synchronization data transmitted by each drive unit represent the time integrated value of the motor voltage integrated since the start of the motor and compensated for the voltage drop over the internal resistance of the motor.

3. An operating system according to claim 1 or 2, **characterized in that** the microprocessor in each drive unit is programmed for activation of the unit to a receiving condition for receiving signals from the mutual communication line and to a transmission condition for transmission of its own identification and synchronization data to the communication line, and that reception and transmission of identification and synchronization data between each drive unit and the mutual communication line are effected by a bit coding with a segmented bit period where a first bit segment begins with a defined level transition by which each drive unit is activated to the receiving condition whereas the activation of a drive unit to the transmitting condition only takes place in the absence of the same level transition in a final bit segment.

4. An operating system according to one of the preceding claims, **characterized in that** the microprocessor in each drive unit is programmed for generating identification and synchronization data for transmission to the mutual communication line (112) with a frame format, and that transmission from one unit to the communication line comprises a frame followed by a frame pause.

5. An operating system according to claim 4, **characterized in that** the microprocessor in each drive unit is programmed to register the occurrence of logical 1 in received identification and synchronization data as dominant bit.

6. An operating system according to claim 5, **characterized in that** the microprocessor in each drive unit in case of simultaneous transmission of data to the mutual communication line (112) and reception of different data transmitted from said line is programmed for effecting a non-destructive arbitration by bits with priority to the one among several simultaneously appearing frames which has the highest numerical value corresponding to the first appearance of logical 1, and for stopping the transmission from the drive unit in question if the arbitration results in prioritization of received data from one or several other drive units.

7. An operating system according to one of the preceding claims, **characterized in that** the microprocessor (6) in each drive unit is programmed to reduce the motor voltage of the drive unit in question, if the data transmitted from the unit have a higher numerical value than the received synchronization data from other drive units.

8. An operating system according to any of the preceding claims, **characterized in that** the microprocessor (6) in each drive unit has connected means for monitoring voltage and current for the motor of the unit and is programmed to reduce the voltage when the supply current reaches a predetermined maximum value.

9. A drive unit for the use in an operating system according to any of the preceding claims, comprising a drive unit casing designed for stationary mounting and containing a motion transfer member (106) for connection to an operated device and drivingly linked to a reversible drive motor (1) having an associated motor control circuit, which drive unit is designed as a program-controlled unit, the motor control circuit comprising a microprocessor (6) with an associated memory (7) containing operation parameters for the drive motor (1) of the unit, **characterized in that** the memory (7) is a reprogrammable memory which further contains identification data and calibration constants for the unit and can be programmed and reprogrammed from the outside via the current supply conductors (108, 109) to the drive unit by means of an external programming device (16) via an interface unit (17) which when connected to the current supply conductors (108, 109) brings these into a programming condition deviating from a normal operating condition and where data can be exchanged between the microprocessor (6) and the external programming unit (16).

10. A drive unit according to claim 9, where the rotating direction of the drive motor (1) in the normal operation condition is defined by the polarity of a DC voltage on the current supply conductors (108, 109), **characterized in that** the programming condition comprises switching the polarity of the current supply conductors (108, 109) at a frequency which is considerably higher than the mains frequency.

**11.** A drive unit according to claim 9 or 10, **characterized in that** the microprocessor (6) is adapted for logging of data during operation of the drive unit and in said programming condition being able to read out such data and/or stored operating parameters from the reprogrammable memory (7) by microprocessor controlled connection and disconnection of a load resistance (23) connected to the current supply conductors (108, 109).

**12.** A drive unit according to claim 10 or 11, **characterized in that** the stored operating parameters comprise a predetermined maximum supply current for the drive motor (1), and that the microprocessor (6) has connected means for monitoring voltage and current for the motor and is programmed to calculate the current supply current on the basis of the measured motor current and to adjust the motor voltage and thus the speed when the supply current reaches the stored maximum value.

**Patentansprüche**

**1.** Betätigungssystem für elektrisch betätigte Vorrichtungen wie Türen, Fenster, Abschirmvorrichtungen und dergleichen, umfassend eine Mehrzahl programmgesteuerter Antriebseinheiten (101-104) jeweils mit einem Antriebseinheit-Gehäuse enthaltend ein zum Anschluss an eine angetriebene Vorrichtung (105) vorgesehenes und an einen reversierbaren Antriebsmotor (1) mit einem zugehörigen Motorsteuerkreis antreibbar gekoppeltes Bewegungsübertragungselement (106) und Mittel zum Synchronisieren der Antriebseinheiten, so dass diese gemeinsam die Vorrichtung (105) betätigen können, **dadurch gekennzeichnet, dass** jede Antriebseinheit eine separate, autonome, an eine gemeinsame Kommunikationslinie (112) angeschlossene Einheit ist, dass der Motorsteuerkreis jeder Antriebseinheit einen Mikroprozessor (6) mit einem zugehörigen Speicher (7) zur Speicherung von Identifikationsinformation umfasst, und dass der Mikroprozessor (6) zum Übertragen erwähnter Identifikationsinformation zu der gemeinsamen Kommunikationslinie (112) zusammen mit Synchronisationsdaten, welche die laufende Stellung des betreffenden Bewegungsübertragungselements (106) repräsentieren, und zum Empfang von Synchronisationsdaten und Identifikationsinformation betreffend die anderen Antriebseinheiten von der gemeinsamen Kommunikationslinie (112) programmiert ist,' und ferner dazu programmiert ist den Antriebsmotor (1) der Antriebseinheit in Abhängigkeit der übertragenen und empfangenen Synchronisationsdaten zu beeinflussen, und nach Aktivieren des Betätigungssystems den zugehörigen Antriebsmotor (1) erst dann zu starten, nachdem dieser sowohl Übertragung von eigenen Identifikationsdaten zu der gemeinsamen Kommunikationslinie (112) durchgeführt als Identifikationsdaten für die übrigen Einheiten von dieser Kommunikationslinie empfangen hat.

**2.** Betätigungssystem nach Anspruch 1, dadurch **gekennzeichnet,** dass die von jeder Antriebseinheit übertragenen Synchronisationsdaten den seit dem Motorstart integrierten und für den Spannungsabfall über den inneren Widerstand des Motors kompensierten Wert der Motorspannung repräsentieren.

**3.** Betätigungssystem nach Anspruch 1 oder 2, **dadurch gekennzeichnet, dass** der Mikroprozessor jeder Antriebseinheit zum Aktivieren der Einheit in einen Empfangszustand zum Empfangen von Signalen von der gemeinsamen Kommunikationslinie, und in einen Übertragungszustand zum Übertragen ihrer eigenen Identifikations- und Synchronisationsdaten zur Kommunikationslinie programmiert ist, und dass Empfang und Übertragung von Identifikations- und Synchronisationsdaten zwischen jeder Antriebseinheit und der gemeinsamen Kommunikationslinie durch eine Bit-Codierung mit einer unterteilten Bit-Periode erfolgt, wo ein erstes Bit-Segment mit einem bestimmten Niveau-Übergang startet, bei welchem jede Antriebseinheit zu dem Empfangszustand aktiviert wird, während Aktivierung einer Antriebseinheit in den Übertragungszustand nur bei Fehlen desselben Niveauübergangs in einem abschliessenden Bit-Segment stattfindet.

**4.** Betätigungssystem nach einem der vorhergehenden Ansprüche, **dadurch gekennzeichnet, dass** der Mikroprozessor jeder Antriebseinheit zum Erzeugen von Identifikations- und Synchronisationsdaten zur'Übertragung an die gemeinsame Kommunikationslinie (112) mit einem Rahmenformat programmiert ist, und dass Übertragung von einer Einheit zu der Kommunikationslinie einen Rahmen und eine nachfolgende Rahmenpause umfasst.

**5.** Betätigungssystem nach Anspruch 4, **dadurch gekennzeichnet, dass** der Mikroprozessor in jeder Antriebseinheit zum Registrieren des Vorkommens von logischem 1 in empfangenen Identifikations- und Synchronisationsdaten als dominantes Bit programmiert ist.

**6.** Betätigungssystem nach Anspruch 5, **dadurch gekennzeichnet, dass** der Mikroprozessor jeder Antriebseinheit im Falle gleichzeitiger Übertragung von Daten zu der gemeinsamen Kommunikationslinie (112) und Empfang von verschiedenen, von dieser Linie übertragenen Daten programmiert ist eine nicht-destruktive Bit-Arbitration vorzunehmen, mit Priorität unter mehreren gleichzeitig auftretenden Rahmen, des einen, der den grössten numerischen Wert entsprechend dem ersten Vorkommen von logischem 1 aufweist, und die Übertragung von der betreffenden Antriebseinheit zu stoppen, insofern die Arbitration in Priorität von einem oder mehreren von anderen Antriebseinheiten empfangener Daten resultiert.

**7.** Betätigungssystem nach einem der vorhergehenden Ansprüche, **dadurch gekennzeichnet, dass** der Mikroprozessor (6) jeder Antriebseinheit programmiert ist die Motorspannung der betreffenden Antriebseinheit zu reduzieren, falls von dieser Einheit übertragene Daten einen grösseren numerischen Wert aufweisen als von anderen Antriebseinheiten empfangene Synchronisationsdaten.

**8.** Betätigungssystem nach einem der vorhergehenden Ansprüche, **dadurch gekennzeichnet, dass** der Mikroprozessor (6) jeder Antriebseinheit angeschlossene Mittel zum Überwachen von Spannung und Strom zum Motor der Einheit aufweist, und zu einem Reduzieren der Spannung programmiert ist, wenn der Zufuhrstrom einen vorausbestimmten Maximumwert erreicht hat.

**9.** Antriebseinheit zur Verwendung in einem Betätigungssystem nach einem der vorhergehenden Ansprüche, umfassend ein für stationären Einbau vorgesehenes Antriebseinheit-Gehäuse mit einem zum Anschluss an eine angetriebene Vorrichtung und an einen reversierbaren Antriebsmotor (1) mit einem zugehörigen Motorsteuerkreis antreibbar angeschlossenes Bewegungsübertragungselement (106), welche Antriebseinheit als eine programmgesteuerte Einheit ausgebildet ist, und der Motorsteuerkreis einen Mikroprozessor (7) mit einem zugehörigen Speicher (7) enthaltend Betriebsparameter für den Antriebsmotor (1) der Einheit umfasst, **dadurch gekennzeichnet, dass** der Speicher (7) ein re-programmierbarer Speicher ist, der ferner Identifikationsdaten und Kalibrierungskonstanten für die Einheit enthält, und der von aussen über die Stromzufuhrleitern (108, 109) zu der Antriebseinheit mit Hilfe einer externen Programmierungsvorrichtung (16) über eine Interface-Einheit (17) programmiert und re-programmiert werden kann, welche Programmierungseinheit bei Anschluss an die Stromzufuhrleitern (108, 109) diese in einen von dem normalen Betriebzustand abweichenden Programmierungszustand bringt, in welchem Zustand Daten zwischen dem Mikroprozessor (6) und der externen Programmierungseinheit (16) ausgetauscht werden können.

**10.** Antriebseinheit nach Anspruch 9, in der die Umlaufrichtung des Antriebsmotors (1) bei normalem Betriebszustand durch die Polarität einer Gleichstromspannung auf den Stromzufuhrleitern (108, 109) bestimmt wird, **dadurch gekennzeichnet, dass** der Programmierungszustand einen Polaritätswechsel der Stromzufuhrleitern (108, 109) bei einer Frequenz, die wesentlich höher ist als die Netzfrequenz, umfasst.

**11.** Antriebseinheit nach Anspruch 9 oder 10, **dadurch gekennzeichnet, dass** der Mikroprozessor (6) zum Aufzeichnen von Daten unter Betrieb der Antriebseinheit vorgesehen ist, und in diesem Programmierungszustand solche Daten und/oder Betriebsparameter durch mikroprozessor-gesteuerte Verbindung oder Unterbrechung eines an die Stromzufuhrleitern (108, 109) angeschlossenen Belastungswiderstandes (23) aus dem re-programmierbaren Speicher (7) auslesen kann.

**12.** Antriebseinheit nach Anspruch 10 oder 11, **dadurch gekennzeichnet, dass** die gespeicherten Betriebsparameter einen vorherbestimmten maximalen Zufuhrstrom für den Antriebsmotor (1) umfassen, und dass der Mikroprozessor (6) angeschlossene Mittel zum Überwachen von Spannung und Strom zum Motor aufweist, und zum Berechnen der laufenden Stromzufuhr auf Basis des gemessenen Motorstroms sowie zum Justieren der Motorspannung und somit der Geschwindigkeit, wenn der Zufuhrstrom den gespeicherten maximalen Wert erreicht hat, programmiert ist.

## Revendications

**1.** Système d'opération de dispositifs actionnés électriquement, tels que des portes, des fenêtres, des dispositifs d'écran et analogues, comprenant une pluralité d'unités d'entraînement à commande programmée (101-104) chacune avec un boîtier de l'unité d'entraînement contenant un élément transmetteur de mouvement (106) à relier à un dispositif manoeuvrable (105) et en liaison de transmission à un moteur d'entraînement réversible (1) présentant un circuit de commande de moteur afférent ainsi que des moyens pour synchroniser les unités d'entraînement si bien qu'elles peuvent conjointement opérer le dispositif (105), **caractérisé en ce que** chaque unité d'entraînement (101-104) est une unité autonome et indépendante reliée à une ligne de communication commune (112), **en ce que** le circuit de commande de moteur dans chaque unité d'entraînement comprend un microprocesseur (6) avec une mémoire afférente (7) pour mémoriser de l'information d'identification, et **en ce que** le microprocesseur (6) est programmé à transmettre ladite information d'identification à la ligne de communication commune (112) avec des données de synchronisation représentant la position actuelle de l'élément transmetteur de mouvement (106) de l'unité d'entraînement en question, et à recevoir les données de synchronisation et l'information d'identification sur les autres unités d'entraînement depuis la ligne de communication commune (112), et de plus est programmé à agir sur le moteur d'entraînement (1) de l'unité d'entraînement sous la dépendance des données de synchronisation transmises et reçues et, postérieurement à l'activation du système d'opération, de ne mettre en marche le moteur d'entraînement afférent qu'après tant sa transmission achevée de ses données d'identification à la ligne de communication commune (112) que sa réception depuis celle-ci de données d'identification venant des autres unités.

**2.** Système d'opération selon la revendication 1, **caractérisé en ce que** les données de synchronisation transmises par chaque unité d'entraînement représentent la valeur intégrée par rapport au temps de la tension de moteur intégrée depuis la mise en marche du moteur et corrigé de la chute de tension sur la résistance intérieure du moteur.

**3.** Système d'opération selon la revendication 1 ou 2, **caractérisé en ce que** le microprocesseur dans chaque unité d'entraînement est programmé à activer l'unité à un état récepteur pour recevoir des signaux depuis la ligne de communication commune et à un état transmetteur pour transmission de ses propres données d'identification et de synchronisation à la ligne de communication, et **en ce que** la réception et la transmission de données d'identification et de synchronisation entre chaque unité d'entraînement et la ligne de communication commune sont effectuées par un codage binaire avec une période binaire segmentée où un premier segment binaire commence par une transition de niveau définie par laquelle chaque unité d'entraînement est activée à l'état récepteur tandis que l'activation d'une unité d'entraînement à l'état transmetteur n'est effectuée qu'en absence de la même transition de niveau dans un segment binaire final.

**4.** Système d'opération selon l'une des revendications précédentes, **caractérisé en ce que** le microprocesseur dans chaque unité d'entraînement est programmé à générer des données d'identification et de synchronisation pour transmission à la ligne de communication commune (112) avec un format de trame, et **en ce que** la transmission depuis l'une unité à la ligne de communication comprend une trame suivie par une pause de trame.

**5.** Système d'opération selon la revendication 4, **caractérisé en ce que** le microprocesseur dans chaque unité d'entraînement est programmé à enregistrer l'occurrence de 1 logique dans des données reçues d'identification et de synchronisation en tant que bit dominant.

**6.** Système d'opération selon la revendication 5, **caractérisé en ce que** le microprocesseur dans chaque unité d'entraînement au cas de transmission de données à la ligne de communication commune (112) et de réception simultanées de différentes données transmises depuis ladite ligne est programmé à effectuer un arbitrage non-destructif par bits avec la priorité à celle parmi plusieurs trames concomitantes qui présente la valeur absolue la plus haute correspondant à la première apparition de 1 logique, et pour arrêter la transmission depuis l'unité d'entraînement en question si l'arbitrage a pour résultat une priorité de données reçues d'une ou de plusieurs autres unités d'entraînement.

**7.** Système d'opération selon l'une des revendications précédentes, **caractérisé en ce que** le microprocesseur (6) dans chaque unité d'entraînement est programmé à réduire la tension de moteur de l'unité d'entraînement en question, si les données transmises depuis l'unité présentent une valeur absolue plus haute que les données de synchronisation reçues d'autres unités d'entraînement.

**8.** Système d'opération selon l'une des revendications précédentes, **caractérisé en ce que** le microprocesseur (6) dans chaque unité d'entraînement présente des moyens reliés pour contrôle de tension et courant pour le moteur de l'unité et est programmé à réduire la tension lorsque le courant d'alimentation atteint une valeur maximale prédéterminée.

**9.** Unité d'entraînement à l'usage dans un système d'opération selon l'une quelconque des revendications précédentes, comprenant un boîtier de l'unité d'entraînement conçu pour montage stationnaire et comprenant un élément transmetteur de mouvement (106) à relier à un dispositif manoeuvrable et en liaison de transmission à un moteur d'entraînement réversible (1) présentant un circuit de commande de moteur afférent, unité d'entraînement qui est conçue comme une unité à commande programmée, le circuit de commande de moteur comprenant un microprocesseur (6) avec une mémoire afférente (7) contenant des paramètres d'opération pour le moteur d'entraînement (1) de l'unité, **caractérisée en ce que** la mémoire (7) est une mémoire reprogrammable comprenant aussi des données d'identification et des constantes de calibrage pour l'unité et peut être programmée et reprogrammée de l'extérieur via les conducteurs du courant d'alimentation (108, 109) à l'unité d'entraînement au moyen d'un dispositif extérieur de programmation (16) via une unité d'interface (17) qui, étant reliée aux conducteurs du courant d'alimentation (108, 109), les fait entrer dans un état de programmation différent d'un état normal d'opération et dans lequel des données peuvent être échangées entre le microprocesseur (6) et l'unité extérieure de programmation (16).

**10.** Unité d'entraînement selon la revendication 9, où le sens de rotation du moteur d'entraînement (1) dans l'état normal d'opération est défini par la polarité d'une tension en courant continu sur les conducteurs du courant d'alimentation (108, 109), **caractérisée en ce que** l'état de programmation comprend l'inversion de la polarité des conducteurs du courant d'alimentation (108, 109) à une fréquence qui est considérablement plus élevée que les fréquences de tension de réseau.

**11.** Unité d'entraînement selon la revendication 9 ou 10, **caractérisée en ce que** le microprocesseur (6) est adapté à enregistrer de données lors de l'opération de l'unité d'entraînement et dans ledit état de programmation à sortir de telles données et/ou des paramètres d'opération enregistrés de la mémoire reprogrammable (7) par connexion et déconnexion commandées par microprocesseur d'une résistance de charge (23) reliée aux conducteurs du courant d'alimentation (108, 109).

**12.** Unité d'entraînement selon la revendication 10 ou 11, **caractérisée en ce que** les paramètres d'opération enregistrés comprennent un courant d'alimentation maximal prédéterminé pour le moteur d'entraînement (1), et **en ce que** le microprocesseur (6) présente des moyens reliés pour contrôler la tension et le courant pour le moteur et est programmé à calculer le courant d'alimentation actuel à la base du courant de moteur mesuré et à régler la tension de moteur et ainsi la vitesse lorsque le courant d'alimentation atteint la valeur maximale enregistrée.

FIG. 1

FIG.6

FIG.2

FIG.3

FIG.4

FIG.5